# EUROPÄISCHE PATENTSCHRIFT

(11) **EP 2 340 583 B1**
(45) Veröffentlichungstag und Bekanntmachung des Hinweises auf die Patenterteilung: **06.11.2013**
(21) Anmeldenummer: 09783206.7
(22) Anmeldetag: 18.09.2009
(51) Int. Cl.: H01M 10/04, H01M 10/50

(54) **KÜHLEINHEIT**
COOLING UNIT
UNITÉ DE REFROIDISSEMENT

(30) Priorität: 18.09.2008 US 98107 P; 30.09.2008 US 101507 P
(43) Veröffentlichungstag der Anmeldung: 06.07.2011
(73) Patentinhaber: MAGNA STEYR Battery Systems GmbH & Co OG, 8141 Zettling (AT)
(72) Erfinder: MARTIN, Helmut, A-8041 Graz (AT); SABATHI, Herbert, A-8041 Graz (AT); SCHLENER, Michael, A-8041 Graz (AT); HOCHGATTERER, Nikolaus, A-8041 Graz (AT); KARNITSCHNIG, Martin, A-8041 Graz (AT); BRANNAN, Roland, A-8041 Graz (AT); PICHLER, Peter, A-8041 Graz (AT); MAIER, Günter, A-8041 Graz (AT); PUCHER, Matthias, A-8041 Graz (AT)
(74) Vertreter: Rausch, Gabriele
(86) Internationale Anmeldenummer: PCT/EP2009/062152
(87) Internationale Veröffentlichungsnummer: WO 2010/031857

(56) Entgegenhaltungen:
- EP-A1- 1 848 051
- WO-A2-03/071616
- US-A1- 2005 170 240

## Beschreibung

Die vorliegende Erfindung betrifft eine Kühleinheit für eine Energiespeichereinheit, die mehrere in einem Stapel angeordnete Flachzellen aufweist.

Bei dem Betrieb von derartigen Energiespeichereinheiten - etwa Batterien (z.B. Lithium-Ionen-Akkumulator) oder Doppelschicht-Kondensatoren (z.B. "Supercaps") - kommt es zu einer nicht unerheblichen Wärmeentwicklung, die unter anderem zu einer Verringerung der Lebensdauer der Energiespeichereinheit führt.

Es ist eine Aufgabe der vorliegenden Erfindung, eine Kühleinheit der eingangs genannten Art zu schaffen, die einerseits kompakt ist, andererseits aber auch eine effiziente und zuverlässige Kühlung des Flachzellenstapels ermöglicht.

Diese Aufgabe wird durch eine Kühleinheit mit den Merkmalen des Anspruchs 1 gelöst.

Die erfindungsgemäße Kühleinheit weist zumindest eine Basisplatte auf, die mit im Wesentlichen planaren und parallel zueinander angeordneten, voneinander beabstandeten Kühlelementen in thermisch leitender Verbindung stehen. Der Basisplatte ist ein Wärmetauscher zugeordnet, der eine der Basisplatte zugewandte Montagefläche aufweist.

Mit anderen Worten stellt der Wärmetauscher eine Wärmesenke dar, die der Umgebung Wärme entzieht. Der Wärmetauscher steht über seine Montagefläche in - unmittelbarer oder mittelbarer - Verbindung mit der Basisplatte, so dass auch die Basisplatte gekühlt wird. Die Kühlung der Basisplatte wiederum führt zu einer Kühlung der Kühlelemente, wodurch den Flachzellen der Energiespeichereinheit Betriebsabwärme entzogen wird, um die Flachzellen zu schützen. Die im Wesentlichen planare Ausgestaltung der Basisplatte und der Kühlelemente, die insbesondere senkrecht zueinander angeordnet sind, reduziert die Fertigungskosten und ermöglicht eine flächige und damit besonders effiziente Kühlung der Flachzellen.

Weitere Ausführungsformen der Erfindung sind in den Unteransprüchen, der Beschreibung und den Zeichnungen angegeben.

Der Wärmetauscher kann als Verdampfer zum Verdampfen eines Kühlmittels ausgebildet sein.

Die Basisplatte der Kühleinheit und die Montagefläche des Wärmetauschers können im Wesentlichen eben sein, um eine im Wesentlichen quaderförmige Grundform der Kühleinheit zu bilden.

Gemäß einer vorteilhaften Ausführungsform ist zwischen der Basisplatte und der Montagefläche des Wärmetauschers eine Separationsplatte angeordnet. Die Separationsplatte kann ein Wärme isolierendes und/oder ein elastisches Material umfassen. Bevorzugt enthält das Material der Separationsplatte natürlichen oder synthetischen Gummi/Kautschuk. Die Separationsplatte kann auch vollständig aus Gummi/Kautschuk bestehen. Eine Separationsplatte aus elastischem Material ermöglicht auf einfache Weise einen Ausgleich von Unebenheiten der Basisplatte und der Montagefläche, so dass geringere Anforderungen an die Oberflächenbeschaffenheit der beiden Flächen gestellt werden.

Durch eine thermisch isolierende/wärmedämmende Eigenschaft der Separationsplatte wird vermieden, dass sich die Basisplatte und die Kühlelemente übermäßig abkühlen und sich so ein großer Temperaturgradient zwischen den Kühlelementen und den Flachzellen ausbildet, der sich nachteilig auf die Lebensdauer der Flachzellen auswirkt. Außerdem ist es von Vorteil, wenn die Temperaturverteilung über alle Kühlelemente und damit den Flachzellenstapel homogen ist, d.h. wenn zum einen alle Flachzellen im Wesentlichen gleich stark gekühlt werden und zum anderen, wenn die Flachzellen selbst nicht in bestimmten Bereichen deutlich stärker gekühlt werden als in anderen Bereichen.

Eine Wärme isolierende/wärmedämmende Separationsplatte stellt somit sicher, dass die Kühlelemente nicht zu kalt werden und dass sich eine homogene Temperaturverteilung ausbildet. Bei einer geeigneten Wahl des Materials der Separationsplatte kann diese auch eine Schutzfunktion ausüben, indem sie beispielsweise das Übertreten von an dem Wärmetauscher gebildetem Kondensat in den Bereich der Kühlelemente/Flachzellen verhindert. Mit anderen Worten verhindert eine derartige Separationsplatte, dass Feuchtigkeit in den Flachzellenstapel eintritt, die dort Korrosion oder Kurzschlüsse verursachen könnte (Dichtungsfunktion).

Es kann vorgesehen sein, dass der Wärmetauscher durch zumindest zwei fest miteinander verbundene Teilplatten gebildet ist und in seinem Inneren zumindest einen Kühlmittelkanal aufweist. Beispielsweise besteht der Wärmetauscher aus zumindest zwei Pressteilplatten, die nach einem untrennbaren Verbinden der beiden Platten einen durchgehenden, insbesondere mäanderförmigen Kanal über einen Teil oder die gesamte Fläche des Wärmetauschers bilden. Beispielsweise ist in einer der Teilplatten ein mäanderförmiger Kanal ausgebildet. Die andere Teilplatte dient dann lediglich als "Deckel", der den Kanal verschließt. Es kann aber auch vorgesehen sein, dass beide Teilplatten entsprechende Ausnehmungen aufweisen, die zusammen den Kanal bilden. Grundsätzlich sind auch Ausführungsformen mit mehreren Kühlmittelkanälen möglich.

Vorzugsweise ist der Wärmetauscher in Einbaulage vertikal angeordnet. Bei dieser Ausführungsform bildet er beispielsweise eine Seitenwand oder einen Abschnitt einer Seitenwand der Kühleinheit. Die vertikale Anordnung sorgt dafür, dass sich an dem vergleichsweise kalten Wärmetauscher bildendes Kondensat nach unten ablaufen kann.

Bevorzugt weist der Wärmetauscher eine Kondensatabführvorrichtung auf, die insbesondere zumindest eine in Einbaulage der Kühleinrichtung gegenüber einer horizontalen Ebene geneigte Rinne und einen Ablaufstutzen aufweist.

Es hat sich als vorteilhaft erwiesen, wenn die Kühleinheit zumindest zwei Kühlmodule (Zellhalterblocks) umfasst, d. h. wenn zumindest zwei Basisplatten mit an ihnen angeordneten Kühlelementen vorgesehen sind. Die Verwendung solcher Module gestattet es, den relativ großen Toleranzen der Flachzellen auf einfache Weise Rechnung zu tragen. Durch die unabhängig voneinander angeordneten Basisplatten/Module kann auch ein so genanntes "swelling" (Aufquellen, Anschwellen) der Flachzellen über deren Lebensdauer kompensiert werden. Die Basisplatten/Module sind insbesondere nebeneinander an dem Wärmetauscher angeordnet. Je nach Größe der Kühleinheit und den zu kompensierenden Toleranzen kann eine beliebige Anzahl von Basisplatten/Modulen vorgesehen sein. Die modulare Bauweise erleichtert auch die Montage und senkt die Herstellungskosten der Kühleinheit.

Zur einfacheren Befestigung der Kühlelemente an der Basisplatte können die Kühlelemente jeweils einen Befestigungsabschnitt aufweisen, der sich im Wesentlichen in einem rechten Winkel relativ zu einer Kühlelementebene erstreckt. Es müssen jedoch nicht alle Kühlelemente mit einem solchen Befestigungsabschnitt versehen sein. Die Kühlelemente können mit der Basisplatte verklebt oder verschweißt sein.

Um eine zuverlässige Befestigung der Basisplatte zu gewährleisten, kann diese an einer den Kühlelementen abgewandten Seite Befestigungsfortsätze aufweisen, die insbesondere zylindrisch ausgebildet sind. Bevorzugt weist der Wärmetauscher Befestigungsöffnungen auf, in die in einem montierten Zustand der Kühleinheit die genannten Befestigungsfortsätze eingreifen. Neben einer zuverlässigen Befestigung wird dadurch eine vereinfachte Zentrierung und damit Montage der genannten Komponenten sichergestellt.

Gemäß einer vorteilhaften Ausführungsform ist zumindest eine Verschlussplatte vorgesehen, die mit zumindest einem Teil der Kühlelemente in Verbindung steht. Die Verschlussplatte stabilisiert die Kühlelemente, indem sie benachbarte Kühlelemente verbindet. Sie trägt weiterhin zu einer effizienteren und homogeneren Kühlung bei, wenn auch sie aus einem Wärme leitenden Material gefertigt ist. Insbesondere ist die Verschlussplatte an dem der Basisplatte abgewandten Ende zumindest eines Teils der Kühlelemente angeordnet. Die Verschlussplatte schließt somit einen zwischen den Kühlelementen vorgesehenen Raum zumindest zum Teil ab, so dass die in einem montierten Zustand der Kühleinheit in den genannten Zwischenräumen angeordneten Flachzellen gegen ein Verschieben gesichert sind.

Bevorzugt weist die Verschlussplatte Ausnehmungen auf, in die in einem montierten Zustand der Verschlussplatte an den Kühlelementen ausgebildete Führungselemente eingreifen. Die Ausnehmungen können schlitzartig sein, in die Führungsnasen der Kühlelemente eingeschoben werden.

Die Erfindung betrifft weiterhin eine Energiespeicher/Kühl-Einheit, mit einer Kühleinheit gemäß zumindest einer der vorstehend beschriebenen Ausführungsformen und mit mehreren Flachzellen. In den Zwischenräumen zwischen benachbarten Kühlelementen der Kühleinheit sind Flachzellen angeordnet.

Nachfolgend wird die Erfindung rein beispielhaft und anhand vorteilhafter Ausführungsformen unter Bezugnahme auf die beigefügten Zeichnungen erläutert. Es zeigen:
- Fig. 1: eine Explosionsdarstellung der erfindungsgemäßen Kühleinheit,
- Fig. 2: die Kühleinheit der Fig. 1 in montiertem Zustand,
- Fig. 3: Kühlmodule der Kühleinheit,
- Fig. 4: einen Ausschnitt einer Schnittansicht eines Kühlmoduls,
- Fig. 5: einen Ausschnitt der Kühleinheit in einer Ansicht von hinten,
- Fig. 6: einen Ausschnitt der Kühleinheit von schräg vorne mit Verschlussplatten, und
- Fig. 7: eine schematische Schnittdarstellung eines Wärmetauschers.

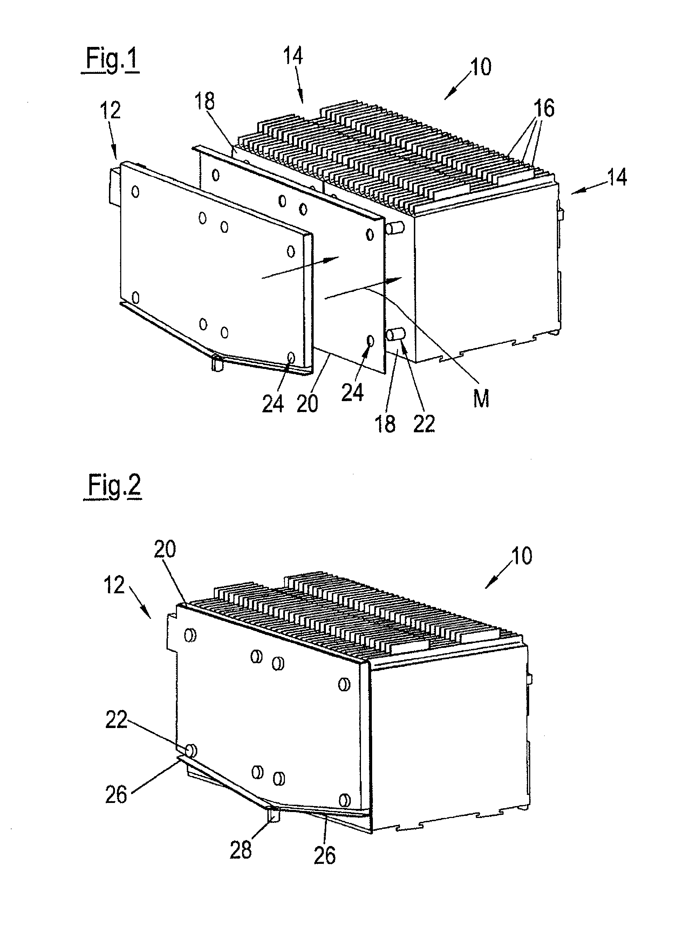

Fig. 1 zeigt eine Kühleinheit 10 in einer Explosionsdarstellung. Die Kühleinheit 10 umfasst einen Wärmetauscher 12, in dessen Inneren ein Kühlmittel verdampft wird, um der Umgebung Wärme zu entziehen. Die Kühleinheit 10 umfasst weiterhin Kühlmodule 14, in die jeweils eine Mehrzahl von Flachzellen 16 einer Batterie eingeschoben sind. Es versteht sich, dass die Kühleinheit 10 anstelle in einer Batterie in jeder anderen Art einer Energiespeichereinheit zum Einsatz gelangen kann. Außerdem muss der Wärmetauscher 12 nicht zwingend als Verdampfer ausgebildet sein.

Die Kühleinheit 10 ist beispielsweise an eine Klimaanlage eines Kraftfahrzeugs angeschlossen und wird mit den Kühlmitteln R134a oder CO2 betrieben. Ein Expansionsventil der Kühleinheit ist mit einer entsprechenden Steuereinheit verbunden, um eine Kühlleistung der Kühleinheit 10 (in etwa 300W) anpassen zu können.

Die Flachzellen 16 bilden einen Stapel, wobei zwischen benachbarten Flachzellen 16 nachstehend noch detailliert beschriebene Kühlelemente angeordnet sind, die mit jeweils mit einer Basisplatte 18 thermisch leitend verbunden sind. Die Basisplatten 18 der beiden Kühlmodule 14 sind wiederum mit dem Wärmetauscher 12 verbunden. Eine von den Flachzellen 16 der Batterie bei ihrem Betrieb erzeugte Abwärme wird über die Kühlelemente und die Basisplatte 18 dem Wärmetauscher 12 zugeführt, der durch das Verdampfen des Kühlmittels als Wärmesenke fungiert. Grundsätzlich können die Kühlmodule 14 direkt an dem Wärmetauscher 12 befestigt sein. Die Kühleinheit 10 weist allerdings zwischen den Basisplatten 18 und dem Wärmetauscher 12 eine elastische Separationsplatte 20 auf, die aus einem Material auf Kautschukbasis besteht. Die Separationsplatte 20 gleicht durch ihre Elastizität Unebenheiten zwischen den Basisplatten 18 und einer Montagefläche des Wärmetauschers 12 aus. Da geringere Anforderungen an die Ebenheit der Basisplatte 18 und der Montagefläche des Wärmetauschers 12 gestellt werden, können die entsprechenden Bauteilkosten gesenkt werden. Die Separationsplatte 20 hat zusätzlich die Aufgabe, die Wärmeleitung zwischen dem Wärmetauscher 12 und den Kühlmodulen 14 zu dämpfen, um eine Art "thermischer Puffer" zwischen dem Wärmetauscher 12 und den Kühlmodulen 14 zu bilden. Bei einer Verwendung der Kühleinheit 10 im Kraftfahrzeugbereich kann der Wärmetauscher 12 an ein Klimasystem eines Fahrzeugs angeschlossen sein, wodurch am Wärmetauscher 12 Temperaturen von etwa 2° bis 5°C entstehen können. Die Flachzellen 16 sollten dahingegen zur Maximierung von deren Lebensdauer auf einer konstanten Temperatur von ca. 35°C gehalten werden. Außerdem sollte diese Temperatur über den Stapel der Flachzellen 16 homogen verteilt sein. Die u.a. auch thermisch isolierend wirkende Separationsplatte 20 verhindert, dass die sehr niedrige Temperatur des Wärmetauschers 12 direkt an der jeweiligen Basisplatte 18 der Kühlmodule 14 anliegt und die Flachzellen 16 somit insbesondere im Bereich um die Basisplatte 18 zu stark abkühlt.

Durch die vergleichsweise schlechte Wärmeleitfähigkeit der Separationsplatte 20 liegt die kühlmodulseitige Oberflächentemperatur der Separationsplatte ca. 15°C unter der optimalen Temperatur der Flachzellen 16 und etwa 10°C bis 15°C über der Temperatur des Wärmetauschers 12. Somit beträgt die Temperaturdifferenz zwischen den Flachzellen 16 und den Kühlelementen 30 maximal 15°C. Dieser Wert wirkt sich auf der einen Seite nicht nachteilig auf den Wirkungsgrad und die Lebensdauer der Flachzellen 16 aus. Auf der anderen Seite ist die Temperaturdifferenz aber auch groß genug, um eine effiziente Kühlung zu gewährleisten.

Ein weiterer Vorteil der Separationsplatte 20 besteht darin, dass sie sich homogenisierend auf die Temperaturverteilung in den Kühlmodulen 14 auswirkt.

Durch die genannten Eigenschaften der Separationsplatte 20 gestaltet sich die Regelung des Wärmetauschers 12 deutlich einfacher. Unter Umständen kann auf entsprechende Regel-Einrichtungen sogar gänzlich verzichtet werden. Mit Hilfe einer geeigneten Dimensionierung der Separationsplatte 20 (z.B. Anpassung der Dicke) und durch eine Wahl eines geeigneten Materials können ihre Eigenschaften an die jeweils vorliegenden Bedingungen angepasst werden.

Durch eine geeignete Wahl des Materials der Separationsplatte 20 wird zudem verhindert, dass Kondensat, das sich an dem vergleichsweise kalten Wärmetauscher 12 bildet, in den Bereich der Flachzellen 16 gelangt. Dort könnte Feuchtigkeit dazu führen, dass verstärkt Korrosion auftritt oder sogar Kurzschlüsse erzeugt werden. Die Separationsplatte 20 wirkt somit abdichtend, d. h. sie hält von dem Wärmetauscher 12 ausgehende Feuchtigkeit von den sensiblen Bestandteilen der Batterie fern.

Um die Kühlmodule 14 mit dem Wärmetauscher 12 zu verbinden, weisen die Basisplatten 18 Bolzen 22 auf, die durch entsprechende Öffnungen 24 der Separationsplatte 20 und des Wärmetauschers 12 greifen. Die Bolzen 22 können zur Befestigung der Kühleinheit 10 in einem nicht gezeigten Gehäuse dienen.

In Fig. 2 ist der montierte Zustand der Kühleinheit 10 mit in den Zwischenräumen zwischen den Kühlelementen angeordneten Flachzellen 16 zu sehen. Die Bolzen 22 durchgreifen vollständig die Öffnungen 24. Diese Ausgestaltung ermöglicht eine zuverlässige Befestigung der einzelnen Komponenten und stellt zudem eine einfache und zuverlässige Montage der Komponenten sicher.

Fig. 2 zeigt zudem - wie auch schon Fig. 1 - dass der Wärmetauscher 12 an seinem unteren Ende geneigte Rinnen 26 aufweist. Die Rinnen 26 sind gegenüber einer horizontalen Ebene und gegeneinander geneigt und führen zu einem Ablaufstutzen 28. In Einbaulage der Kühleinheit 10 ist der Wärmetauscher 12 - wie gezeigt - vertikal angeordnet. An seiner freien, den Flachzellen 16 abgewandten Seite entstehendes Kondensat läuft schwerkraftbedingt nach unten und wird dort von den Rinnen 26 aufgefangen und über den Ablaufstutzen 28 abgeführt.

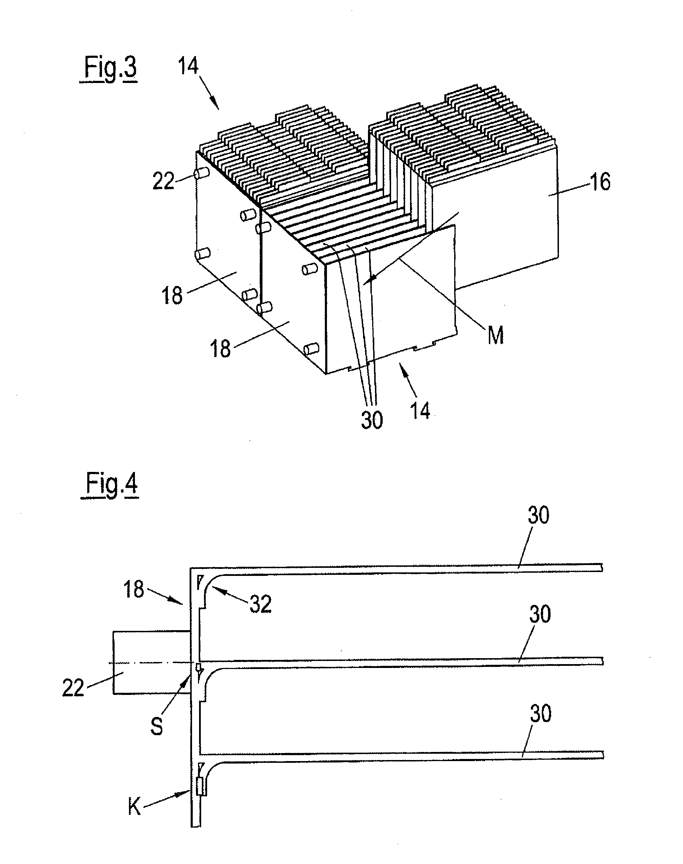

Fig. 3 zeigt die Kühlmodule 14, wobei das linke Kühlmodul 14 (im Hintergrund) bereits mit Flachzellen 16 versehen ist. Das rechte Kühlmodul 14 (im Vordergrund) befindet sich in einem Montagezustand. Die diesem Kühlmodul 14 zugeordneten Flachzellen 16 werden entlang einer Montagebewegung M in die Zwischenräume zwischen Kühlelementen 30 eingeschoben, so dass sich eine alternierende Abfolge von Kühlelementen 30 und Flachzellen 16 bildet. Die Kühlelemente 30 stehen in flächigem Kontakt mit den Flachzellen 16, um eine gute thermische Kopplung zwischen diesen Komponenten herzustellen. Außerdem fungieren die Kühlelemente 30 als Abstandshalter zwischen den Flachzellen 16 und tragen zur Stabilisierung des Flachzellenstapels bei.

Fig. 4 verdeutlicht den Aufbau der Kühlmodule 14 in einem Ausschnitt einer Schnittansicht eines der Kühlmodule 14. Die Kühlelemente 30 weisen Befestigungsabschnitte 32 auf, die sich im Wesentlichen rechtwinklig zu der Längserstreckung der Elemente 30 erstrecken (L-Form). Die Befestigungsabschnitte 32 vergrößern eine Kontaktfläche des jeweiligen Kühlelements 30 mit der Basisplatte 18, was sich insbesondere als vorteilhaft erweist, wenn zwischen den Kühlelementen 30 und der Basisplatte 18 eine Klebeverbindung K vorgesehen ist. Alternativ oder zusätzlich kann eine Schweißverbindung S vorgesehen sein, die auch an einem nicht abgewinkelten Ende der Kühlelemente 30 angeordnet sein kann. Es versteht sich, dass sich die Schweißverbindung S auch im Bereich des Befestigungsabschnitts 32 befinden kann, um eine besonders stabile Verbindung zu erzeugen. Der Befestigungsabschnitt 32 vereinfacht nicht nur die Befestigung, sondern trägt auch zu einer besseren thermischen Kopplung des jeweiligen Kühlelements 30 mit der Basisplatte 18 bei. Die Kühlelemente 30 und die Basisplatte 18 sind vorzugsweise aus Aluminium.

An dieser Stelle sei daraufhin hingewiesen, dass die modulare Bauweise, d. h. das Vorsehen einzelner Kühlmodule 14, zum einen Kostenvorteile mit sich bringt, da unterschiedlich große Wärmetauscher 12 mit unterschiedlichen Anzahlen von Kühlmodulen 14 bestückt werden können, so dass nicht für jede Ausführungsform eines Wärmetauschers 12 ein speziell angepasstes Kühlmodul 14 vorgehalten werden muss. Außerdem ermöglicht die modulare Bauweise die Aufnahme von fertigungsbedingten Toleranzen und eine verbesserte Kompensierung eines "swellings" der Flachzellen 16, die insbesondere prismatische "POUCH"-Zellen sind.

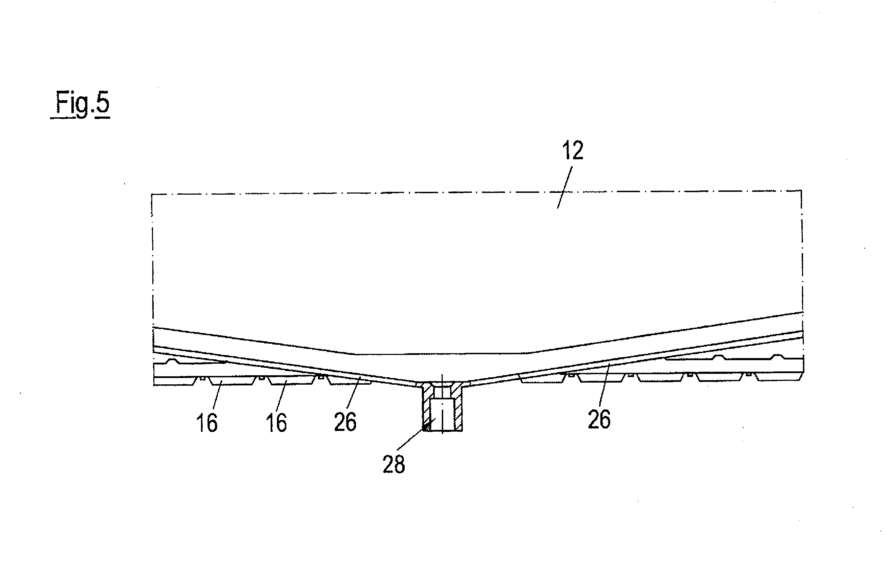

Fig. 5 zeigt einen Ausschnitt der den Flachzellen 16 abgewandten Seite des Wärmetauschers 12, wobei der Ablaufstutzen 28 in einem Schnitt zu sehen ist. Die Rinnen 26 sind bevorzugt mindestens 15° Grad gegenüber der Horizontalen geneigt und fangen das an dem Wärmetauscher 12 herab rinnende Kondensat (beispielsweise kondensierende Luftfeuchtigkeit) auf.

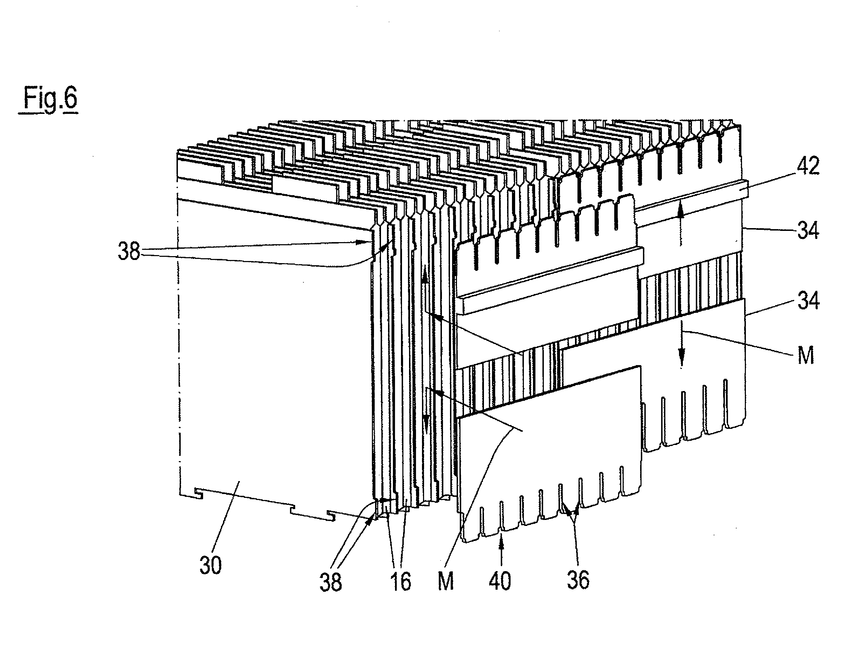

Fig. 6 zeigt die Kühleinheit 10 in einer Ansicht von schräg vorne. Um zu verhindern, dass die Flachzellen 16 seitlich aus den Kühlmodulen 14 heraus geschoben werden können, sind an der der Basisplatte 18 gegenüber liegenden Seite der Kühleinheit 10 Verschlussplatten 34 vorgesehen, die Schlitze 36 aufweisen. Die Schlitze 36 dienen zur Befestigung der Verschlussplatte 34 an den Kühlelementen 30, die zu diesem Zweck entsprechende Führungsnasen 38 aufweisen. Für eine Montage werden die Verschlussplatten 34 auf die der Basisplatte 18 abgewandten Enden der Kühlelemente 30 aufgesetzt und in einer Montagebewegung M nach oben bzw. nach unten geschoben. Das "Einfädeln" der Führungsnasen 38 in die Schlitze 36 wird durch an den Verschlussplatten 34 vorgesehene Kerben 40 erleichtert. Zur Stabilisierung und für eine vereinfachte Montage sind an den Verschlussplatten 34 Rippen 42 vorgesehen, die auch als Abstandshalter gegenüber benachbart angeordnete Bauteile der Batterie dienen können.

Die Verschlussplatten 34 tragen zur Stabilität der Kühlmodule 14 bei, da sie die Kühlelemente 30 an ihren offenen Enden miteinander verbinden. Außerdem ermöglichen sie eine Wärmeleitung (thermische Brücke), so dass auch in diesem Bereich eine Kühlung der Flachzellen 16 möglich ist bzw. thermische Gradienten in dem Stapel der Flachzellen 16 weitgehend minimiert werden.

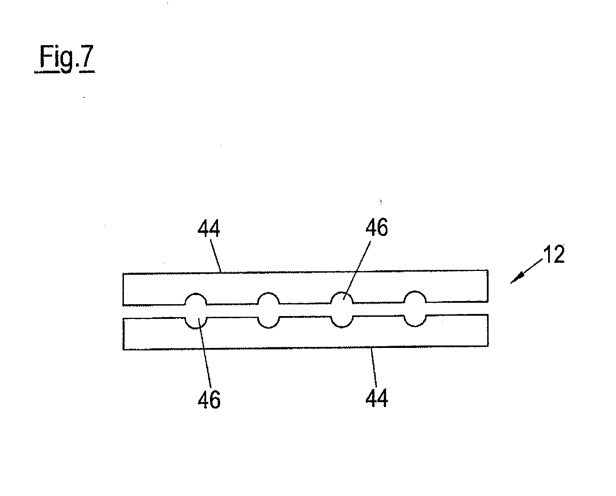

Fig. 7 zeigt eine Ausführungsform des Wärmetauschers 12. Der Wärmetauscher 12 besteht aus zwei Teilplatten 44, die jeweils mit Ausnehmungen 46 versehen sind. Die Ausnehmungen 46 bilden auf der jeweiligen Teilplatte 44 einen mäandrierenden Kanal. Durch ein Zusammensetzen der beiden Teilplatten 44 bilden die Ausnehmungen 46 zusammen einen Kühlmittelkanal mit im Wesentlichen kreisförmigem Querschnitt, durch den Kühlmittel strömt, um Wärme aus dem Wärmetauscher 12 abzuführen. Es versteht sich, dass auch lediglich an einer der Teilplatten 44 eine Ausnehmung 46 ausgebildet sein kann. Der Querschnitt des Kühlmittelkanals kann beliebig gewählt werden. Die Teilplatten 44 können lösbar miteinander verbunden sein, um eine eventuell notwendige Reparatur des Wärmetauschers 12 zu ermöglichen. Bevorzugt werden die Teilplatten 44 allerdings untrennbar miteinander verbunden, insbesondere verschweißt.

### Bezugszeichenliste

- 10: Kühleinheit
- 12: Wärmetauscher
- 14: Kühlmodul
- 16: Flachzelle
- 18: Basisplatte
- 20: Separationsplatte
- 22: Bolzen
- 24: Öffnung
- 26: Rinne
- 28: Ablaufstutzen
- 30: Kühlelement
- 32: Befestigungsabschnitt
- 34: Verschlussplatte
- 36: Schlitz
- 38: Führungsnase
- 40: Kerbe
- 42: Rippe
- 44: Teilplatte
- 46: Ausnehmung

- M: Montagebewegung
- K: Klebeverbindung
- S: Schweißverbindung

## Patentansprüche

1. Kühleinheit für eine Energiespeichereinheit, die mehrere in einem Stapel angeordnete Flachzellen (16) aufweist, umfassend zumindest eine Basisplatte (18), die mit im Wesentlichen planaren und parallel zueinander angeordneten, voneinander beabstandeten Kühlelementen (30) in thermisch leitender Verbindung steht, und einen der Basisplatte (18) zugeordneten Wärmetauscher (12), der eine der Basisplatte (18) zugewandte Montagefläche aufweist.

2. Kühleinheit nach Anspruch 1,
**dadurch gekennzeichnet, dass**
der Wärmetauscher (12) als Verdampfer zum Verdampfen eines Kühlmittels ausgebildet ist.

3. Kühleinheit nach Anspruch 1 oder 2,
**dadurch gekennzeichnet, dass**
die Basisplatte (18) und die Montagefläche im Wesentlichen eben sind.

4. Kühleinheit nach zumindest einem der vorstehenden Ansprüche,
**dadurch gekennzeichnet, dass**
zwischen der Basisplatte (18) und der Montagefläche des Wärmetauschers (12) eine Separationsplatte (20) angeordnet ist.

5. Kühleinheit nach Anspruch 4,
**dadurch gekennzeichnet, dass**
die Separationsplatte (20) ein Wärme isolierendes Material umfasst.

6. Kühleinheit nach Anspruch 4 oder 5,
**dadurch gekennzeichnet, dass**
die Separationsplatte (20) ein elastisches Material umfasst.

7. Kühleinheit nach zumindest einem der Ansprüche 4 bis 6,
**dadurch gekennzeichnet, dass**
das Material der Separationsplatte (20) natürlichen oder synthetischen Gummi enthält.

8. Kühleinheit nach zumindest einem der vorstehenden Ansprüche,
**dadurch gekennzeichnet, dass**
der Wärmetauscher (12) durch zumindest zwei fest miteinander verbundene Teilplatten (44) gebildet ist und in seinem Inneren zumindest einen Kühlmittelkanal aufweist.

9. Kühleinheit nach Anspruch 8,
**dadurch gekennzeichnet, dass**
der Kühlmittelkanal durch eine Ausnehmung (46) an zumindest einer der Teilplatten (44) gebildet ist.

10. Kühleinheit nach zumindest einem der vorstehenden Ansprüche,
**dadurch gekennzeichnet, dass**
der Wärmetauscher (12) in Einbaulage der Kühleinheit vertikal angeordnet ist.

11. Kühleinheit nach zumindest einem der vorstehenden Ansprüche,
**dadurch gekennzeichnet, dass**
der Wärmetauscher (12) eine Kondensatabführvorrichtung aufweist, die insbesondere zumindest eine in Einbaulage der Kühleinheit gegenüber einer horizontalen Ebene geneigte Rinne (26) und einen Ablaufstutzen (28) aufweist.

12. Kühleinheit nach zumindest einem der vorstehenden Ansprüche,
**dadurch gekennzeichnet, dass**
die Kühleinheit zumindest zwei Basisplatten (18) umfasst, die insbesondere nebeneinander an dem Wärmetauscher (12) angeordnet sind.

13. Kühleinheit nach zumindest einem der vorstehenden Ansprüche,
**dadurch gekennzeichnet, dass**
zumindest ein Teil der Kühlelemente (30) einen jeweiligen Befestigungsabschnitt (32) aufweist, der sich im Wesentlichen in einem rechten Winkel relativ zu einer Kühlelementebene erstreckt.

14. Kühleinheit nach zumindest einem der vorstehenden Ansprüche,
**dadurch gekennzeichnet, dass**
die Kühlelemente (30) mit der Basisplatte (18) verklebt oder verschweißt sind.

15. Kühleinheit nach zumindest einem der vorstehenden Ansprüche,
**dadurch gekennzeichnet, dass**
die Basisplatte (18) an einer den Kühlelementen (30) abgewandten Seite Befestigungsfortsätze (22) aufweist, die insbesondere zylindrisch ausgebildet sind.

16. Kühleinheit nach Anspruch 15,
**dadurch gekennzeichnet, dass**
der Wärmetauscher (12) Befestigungsöffnungen (24) aufweist, in die in einem montierten Zustand der Kühleinheit die Befestigungsfortsätze (22) eingreifen.

17. Kühleinheit nach zumindest einem der vorstehenden Ansprüche,
**dadurch gekennzeichnet, dass**
zumindest eine Verschlussplatte (34) vorgesehen ist, die mit zumindest einem Teil der Kühlelemente (30) in Verbindung steht.

18. Kühleinheit nach Anspruch 17,
**dadurch gekennzeichnet, dass**
die Verschlussplatte (34) Ausnehmungen (36) aufweist, in die in einem montierten Zustand der Verschlussplatte (34) an den Kühlelementen (30) ausgebildete Führungselemente (38) eingreifen.

19. Energiespeicher/Kühl-Einheit, mit einer Kühleinheit nach zumindest einem der vorstehenden Ansprüche und mit mehreren Flachzellen (16), wobei die Flachzellen (16) in Zwischenräumen zwischen benachbarten Kühlelementen (30) angeordnet sind.

## Claims

1. Cooling unit for an energy store unit, which has a plurality of flat cells (16) arranged in a stack, comprising at least one base plate (18), which is thermally conductively connected to substantially planar cooling elements (30) that are spaced apart from one another and are arranged parallel to one another, and a heat exchanger (12), which is assigned to the base plate (18) and has an assembly surface facing towards the base plate (18).

2. Cooling unit according to Claim 1,
**characterized in that**
the heat exchanger (12) is in the form of an evaporator for evaporating a coolant.

3. Cooling unit according to Claim 1 or 2,
**characterized in that**
the base plate (18) and the assembly surface are substantially flat.

4. Cooling unit according to at least one of the preceding claims,
**characterized in that**
a separation plate (20) is arranged between the base plate (18) and the assembly surface of the heat exchanger (12).

5. Cooling unit according to Claim 4,
**characterized in that**
the separation plate (20) comprises a heat-insulating material.

6. Cooling unit according to Claim 4 or 5,
**characterized in that**
the separation plate (20) comprises an elastic material.

7. Cooling unit according to at least one of Claims 4 to 6,
**characterized in that**
the material of the separation plate (20) contains natural or synthetic rubber.

8. Cooling unit according to at least one of the preceding claims,
**characterized in that**
the heat exchanger (12) is formed by at least two firmly interconnected part-plates (44) and has at least one coolant duct in its interior.

9. Cooling unit according to Claim 8,
**characterized in that**
the coolant duct is formed by a recess (46) on at least one of the part-plates (44).

10. Cooling unit according to at least one of the preceding claims,
**characterized in that**
the heat exchanger (12) is arranged vertically when the cooling unit is in the installed position.

11. Cooling unit according to at least one of the preceding claims,
**characterized in that**
the heat exchanger (12) has a condensate removal apparatus, which in particular has at least one groove (26) inclined with respect to a horizontal plane when the cooling unit is in the installed position and an outlet nozzle (28).

12. Cooling unit according to at least one of the preceding claims,
**characterized in that**
the cooling unit comprises at least two base plates (18), which are arranged in particular alongside one another on the heat exchanger (12).

13. Cooling unit according to at least one of the preceding claims,
**characterized in that**
at least some of the cooling elements (30) have a respective fastening portion (32), which extends substantially at a right angle in relation to a cooling element plane.

14. Cooling unit according to at least one of the preceding claims,
**characterized in that**
the cooling elements (30) are adhesively bonded or welded to the base plate (18).

15. Cooling unit according to at least one of the preceding claims,
**characterized in that**,
on a side which faces away from the cooling elements (30), the base plate (18) has fastening projections (22) which in particular have a cylindrical form.

16. Cooling unit according to Claim 15,
**characterized in that**
the heat exchanger (12) has fastening openings (24), into which the fastening projections (22) engage when the cooling unit is in an assembled state.

17. Cooling unit according to at least one of the preceding claims,
**characterized in that**
provision is made of at least one closure plate (34), which is connected to at least some of the cooling elements (30).

18. Cooling unit according to Claim 17,
**characterized in that**
the closure plate (34) has recesses (36), into which guide elements (38) formed on the cooling elements (30) engage when the closure plate (34) is in an assembled state.

19. Energy store/cooling unit, having a cooling unit according to at least one of the preceding claims and having a plurality of flat cells (16), wherein the flat cells (16) are arranged in interstices between adjacent cooling elements (30).

## Revendications

1. Unité de refroidissement pour une unité d'accumulation d'énergie, qui présente plusieurs cellules planes (16) disposées en pile, comprenant au moins une plaque de base (18), qui est en liaison thermoconductrice avec des éléments de refroidissement (30) espacés les uns des autres essentiellement plans et disposés parallèlement les uns aux autres, et un échangeur de chaleur (12) associé à la plaque de base (18), lequel présente une surface de montage tournée vers la plaque de base (18).

2. Unité de refroidissement selon la revendication 1,
**caractérisée en ce que**
l'échangeur de chaleur (12) est réalisé sous forme d'évaporateur pour évaporer un fluide de refroidissement.

3. Unité de refroidissement selon la revendication 1 ou 2,
**caractérisée en ce que**
la plaque de base (18) et la surface de montage sont essentiellement planes.

4. Unité de refroidissement selon au moins l'une quelconque des revendications précédentes,
**caractérisée en ce**
**qu'**une plaque de séparation (20) est disposée entre la plaque de base (18) et la surface de montage de l'échangeur de chaleur (12).

5. Unité de refroidissement selon la revendication 4,
**caractérisée en ce que**
la plaque de séparation (20) comprend un matériau thermiquement isolant.

6. Unité de refroidissement selon la revendication 4 ou 5,
**caractérisée en ce que**
la plaque de séparation (20) comprend un matériau élastique.

7. Unité de refroidissement selon au moins l'une quelconque des revendications 4 à 6,
**caractérisée en ce que**
le matériau de la plaque de séparation (20) comprend du caoutchouc naturel ou synthétique.

8. Unité de refroidissement selon au moins l'une quelconque des revendications précédentes,
**caractérisée en ce que**
l'échangeur de chaleur (12) est formé par au moins deux plaques partielles (44) connectées fixement l'une à l'autre et présente, en son intérieur, au moins un canal de fluide de refroidissement.

9. Unité de refroidissement selon la revendication 8,
**caractérisée en ce que**
le canal de fluide de refroidissement est formé par un évidement (46) au niveau d'au moins l'une des plaques partielles (44).

10. Unité de refroidissement selon au moins l'une quelconque des revendications précédentes,
**caractérisée en ce que**
l'échangeur de chaleur (12) est disposé verticalement dans la position installée de l'unité de refroidissement.

11. Unité de refroidissement selon au moins l'une quelconque des revendications précédentes,
**caractérisée en ce que**
l'échangeur de chaleur (12) présente un dispositif d'évacuation du condensat, lequel présente notamment au moins une rigole (26) inclinée par rapport à un plan horizontal dans la position installée de l'unité de refroidissement et une tubulure d'écoulement (28).

12. Unité de refroidissement selon au moins l'une quelconque des revendications précédentes,
**caractérisée en ce que**
l'unité de refroidissement comprend au moins deux plaques de base (18), qui sont disposées notamment l'une à côté de l'autre au niveau de l'échangeur de chaleur (12).

13. Unité de refroidissement selon au moins l'une quelconque des revendications précédentes,
**caractérisée en ce**
**qu'**au moins une partie des éléments de refroidissement (30) présente une portion de fixation respective (32), qui s'étend essentiellement suivant un angle droit par rapport à un plan des éléments de refroidissement.

14. Unité de refroidissement selon au moins l'une quelconque des revendications précédentes,
**caractérisée en ce que**
les éléments de refroidissement (30) sont collés ou soudés à la plaque de base (18).

15. Unité de refroidissement selon au moins l'une quelconque des revendications précédentes,
**caractérisée en ce que**
la plaque de base (18) présente, au niveau d'un côté opposé aux éléments de refroidissement (30), des saillies de fixation (22) qui sont réalisées notamment sous forme cylindrique.

16. Unité de refroidissement selon la revendication 15,
**caractérisée en ce que**
l'échangeur de chaleur (12) présente des ouvertures de fixation (24), dans lesquelles s'engagent, dans l'état monté de l'unité de refroidissement, les saillies de fixation (22).

17. Unité de refroidissement selon au moins l'une quelconque des revendications précédentes,
**caractérisée en ce**
**qu'**au moins une plaque de fermeture (34) est prévue, laquelle est en liaison avec au moins une partie des éléments de refroidissement (30).

18. Unité de refroidissement selon la revendication 17,
**caractérisée en ce que**
la plaque de fermeture (34) présente des évidements (36) dans lesquels, dans l'état monté de la plaque de fermeture (34), viennent en prise des éléments de guidage (38) réalisés sur les éléments de refroidissement (30).

19. Accumulateur d'énergie/unité de refroidissement, comprenant une unité de refroidissement selon au moins l'une quelconque des revendications précédentes et plusieurs cellules planes (16), les cellules planes (16) étant disposées dans des espaces intermédiaires entre des éléments de refroidissement adjacents (30).
